# EUROPEAN PATENT APPLICATION

(11) **EP 3 085 560 A1**
(43) Date of publication of application: **26.10.2016**
(21) Application number: 14870676.5
(22) Date of filing: 01.04.2014
(51) Int. Cl.: B60J 5/00

(54) **PIPE-LIKE REINFORCEMENT MEMBER FOR VEHICLE**

(30) Priority: 19.12.2013 JP 2013262057
(71) Applicant: Toyoda Iron Works Co., Ltd., Toyota-shi Aichi 471-8507 (JP)
(72) Inventor: KITAGUCHI, Kazuaki, Toyota-shi Aichi 471-8507 (JP); OBAYASHI, Akira, Toyota-shi Aichi 471-8507 (JP); NAKANISHI, Makoto, Toyota-shi Aichi 471-8507 (JP); NAKAYAMA, Takeshi, Toyota-shi Aichi 471-8507 (JP)
(74) Representative: Wills, Andrew Jonathan
(86) International application number: PCT/JP2014/059686
(87) International publication number: WO 2015/093069

(57) **Abstract**

To reduce the buckling of an attachment portion to assuredly provide desired reinforcing ability of a tubular portion, the attachment base 32 is raised to bring forward the contact surface 32f, forming the peripheral wall 38. This allows the impact beam 10 to be disposed in the vehicle so that the contact surface 32f closely contacts the mounting location 20 for the secure fastening of the impact beam 10 to the mounting location 20. The lateral edges of the attachment portion comprises the lateral flanges 40, 42 on the opposite sides of the peripheral wall 38, and the peripheral wall 38 and the lateral flanges 40, 42 together form the turnback portions 44, 46 on opposite sides of the attachment base 32, each turnback portions defining a concavity recessed from the contact surface 32f, and having a U-shaped section perpendicular to the centerline O of the tubular portion 12. This configuration provides an increased rigidity against external forces that have a component parallel to the length of the tubular portion 12 and reduce the buckling of the attachment portions 14, 16, thereby stably providing the desired reinforcing ability of the tubular portion 12.

## Description

### TECHNICAL FIELD

The present invention relates to tubular reinforcements for vehicles, and more particularly to a technique of reducing the buckling of an attachment portion to stably provide desired reinforcing ability.

### BACKGROUND ART

A known tubular reinforcement for vehicles includes (a) a tubular portion comprising a sheet metal rolled to have closed edges, and (b) an integral attachment portion formed from the same sheet metal, the attachment portion extending longitudinally from an end of the tubular portion, and having a planar attachment base, (c) wherein the tubular reinforcement is disposed in the vehicle so that a contact surface of the attachment base closely contacts a mounting location in the vehicle. The impact beam described in Patent Document 1 is an example of such a tubular reinforcement. This impact beam is disposed in side doors or other structure of a vehicle to provide reinforcement against an impact load in the event of a side collision. The attachment portion (i.e. the joint portion 3) is bent into an L-shape to put forward the contact surface, and the attachment base is made to closely contact the door and is securely fastened to the door by such means as bolts.

### Prior Art Document(s)

### Patent Document(s)

Patent Document 1: Japanese Patent Application Publication No. H11-207424

### SUMMARY OF THE INVENTION

### Problem to be Solved by the Invention

Such a conventional tubular reinforcement, however, cannot assuredly provide desired reinforcing ability of the tubular portion because the attachment portions at both ends include the L-shaped bent portions which tend to buckle when subjected to an external force (e.g. impact load) that has a component in parallel to the length of the tubular portion.

The prevent invention aims, in view of the above circumstances, to reduce the buckling of an attachment portion to stably provide desired reinforcing ability of a tubular portion.

### Means for Solving the Problem

In order to achieve the above object, the invention provides in a first aspect a tubular reinforcement for a vehicle, including (a) a tubular portion comprising a sheet metal rolled to have closed edges, and (b) an integral attachment portion formed from the same sheet metal, the attachment portion extending longitudinally from an end of the tubular portion, and having a planar attachment base, (c) wherein the tubular reinforcement is disposed in the vehicle so that a contact surface of the attachment base closely contacts a mounting location in the vehicle, characterized in that (d) the attachment base is raised to bring forward the contact surface, forming a peripheral wall, (e) the lateral edges of the attachment portion comprise lateral flanges on the opposite sides of the peripheral wall, the lateral flanges extending along with the peripheral wall toward the plane of the contact surface , and (f) the peripheral wall and the lateral flanges together form turnback portions on the opposite sides of the attachment base, each turnback portions defining a concavity recessed from the contact surface, and having a U-or J-shaped section perpendicular to the centerline of the tubular portion.

The term U- or J-shaped as used above may refer to turning not only 90°, like an L-shape, but further at least 45° to its end so that the turnback portion turns around by an angle of at least 135° as a whole.

The invention provides, in a second aspect, the tubular reinforcement for a vehicle of the first aspect, characterized in that (a) the attachment base is oriented to extend parallel to the centerline of the tubular portion and perpendicular to a plane passing through the centerline and a line of closed edges of the tubular portion, and (b) the tubular reinforcement is disposed in the vehicle in such an attitude about the centerline that the closed edges of the tubular portion faces toward the outside of the vehicle, from which an external force such as an impact load may be input.

The invention provides, in a third aspect, the tubular reinforcement for a vehicle of the first or second aspect, characterized in that (a) the attachment base defines a fastening hole for passing a threaded fastener therethrough, and the attachment base is flat circular including the fastening hole, and (b) the peripheral wall is partially cylindrical comprising at least half circumference including portions that continue from the tubular portion.

### Effects of the Invention

In the tubular reinforcement thus configured, the attachment base is raised to bring forward the contact surface forming the peripheral wall. This allows the tubular reinforcement to be disposed in the vehicle so that the contact surface of the attachment base closely contacts the mounting location for the secure fastening of the tubular reinforcement to the mounting location. The lateral edges of the attachment portion comprises the lateral flanges on the opposite sides of the peripheral wall, and the peripheral wall and the lateral flanges together form the turnback portions on the opposite sides of the attachment base, each turnback portions defining a concavity recessed from the contact surface, and having a U- or J-shaped section perpendicular to the centerline of the tubular portion. This configuration provides an increased rigidity against external forces that have a component in parallel to the length of the tubular portion and reduces buckling of the attachment portions, thereby stably providing the desired reinforcing ability of the tubular portion.

In the second aspect of the invention, the attachment base is oriented to extend parallel to the centerline of the tubular portion and perpendicular to the plane passing through the centerline and the line of the closed edges of the tubular portion, and the tubular reinforcement is disposed in the vehicle in such an attitude that the closed edges of the tubular portion faces toward the outside of the vehicle. This configuration assuredly provides the desired reinforcing ability of the tubular portion against an external force such as an impact load from the outside of the vehicle.

In the third aspect of the invention, the attachment base is flat circular, and the peripheral wall is partially cylindrical comprising at least half circumference. This structure, combined with the lateral flanges on opposite sides of the peripheral wall, assuredly provides an increased rigidity of the attachment portion.

### BRIEF DESCRIPTION OF THE DRAWINGS

FIG. 1 is a perspective view showing an example of an impact beam in an embodiment of the present invention, as viewed from the side of a tubular portion that is opposite to the joint (i.e. abutting edges).
FIG. 2 is a perspective view of the impact beam of FIG. 1, as viewed from the joint side (having the abutting edges) of the tubular portion.
FIG. 3 is an enlarged sectional view of the tubular portion, viewed in the direction of arrows III, III in FIG. 1.
FIG. 4 is an enlarged sectional view of an attachment portion fixed to a mounting location in a vehicle, viewed in the direction of arrows IV, IV in FIG. 1.
FIG. 5 is a schematic sectional view of the impact beam of FIG. 1 disposed in a side door of the vehicle.

### MODES FOR CARRYING OUT THE INVENTION

A tubular reinforcement for vehicles according to the present invention is typically disposed in a side door of the vehicle, or on the inner side of a side panel of the vehicle, but may be used to provide reinforcement for various structures of a vehicle such as a back door, an engine hood, and a floor panel. A suitable form of the tubular portion may be a simple rolled cylindrical shape with a substantially circular section. However, the tubular portion may take various other forms. For example, the tubular portion may have a planar side in its circumference around the centerline, or the tubular portion may be rectangular with a rectangular section. The two rolled edges may either abut on or overlap each other, and optionally the closed edges are integrally welded together, for example, by arc welding.

Preferably, the attachment portions each having the planar attachment base are located, e.g., at both longitudinal ends of the tubular portion, symmetric to each other with respect to the tubular portion, and the present invention may be employed in both these attachment portions. However, the attachment portions may be asymmetric, and the present invention may be employed in only one of the attachment portions. The planar attachment base may extend parallel to the centerline of the tubular portion. However, the planar attachment base may be angled to the tubular portion such that the attachment base departs from or approaches the centerline of the tubular portion as it goes away from the tubular portion to its end. The lateral flanges may extend, for example, substantially parallel to the centerline of the tubular portion on opposite sides of the peripheral wall, and are gradually curled to smoothly transition to the tubular portion.

In the second aspect of the invention, the attachment base is oriented to extend perpendicular to the plane passing through the centerline and the line of the closed edges of the tubular portion. However, in embodiments for other aspects of the inventions, the orientation of the attachment base may be designed as appropriate, for example, in view of the form of the mounting location. In embodiments for the second aspect of the invention, for example, the attachment base may be raised into the same side of the tubular reinforcement as the closed edges of the tubular portion, with that side of the attachment base serving as the contact surface. However, the attachment base may be raised into the opposite side, with that side of the attachment base serving as the contact surface.

The distance *t* from the centerline of the tubular portion to the contact surface may be equal to or larger than the distance from the centerline to an outer peripheral surface of the tubular portion to ensure that the tubular reinforcement can be attached at the attachment portion to any even mounting location while the tubular portion does not interfere with the even mounting location. Depending on the form of the mounting location, the tubular reinforcement can be attached to the mounting location while the tubular portion does not interfere with the location if the distance *t* is smaller than that from the centerline to the outer peripheral surface of the tubular portion.

In the third aspect of the invention, the attachment base has the fastening hole, and the threaded fastener can be used to fix the attachment base to the mounting location. However, other means such as welding may be used to secure the attachment base to the mounting location. The attachment base may be flat circular, and the peripheral wall may be partially cylindrical comprising at least half circumference. However, the attachment base and the peripheral wall may be designed as appropriate. The peripheral wall may be fully cylindrical, and can be formed by press working processes such as drawing. The peripheral wall may be truncated-conical or otherwise tapered whose diameter decreases as it goes closer to the end, i.e. to the attachment base.

### Embodiments

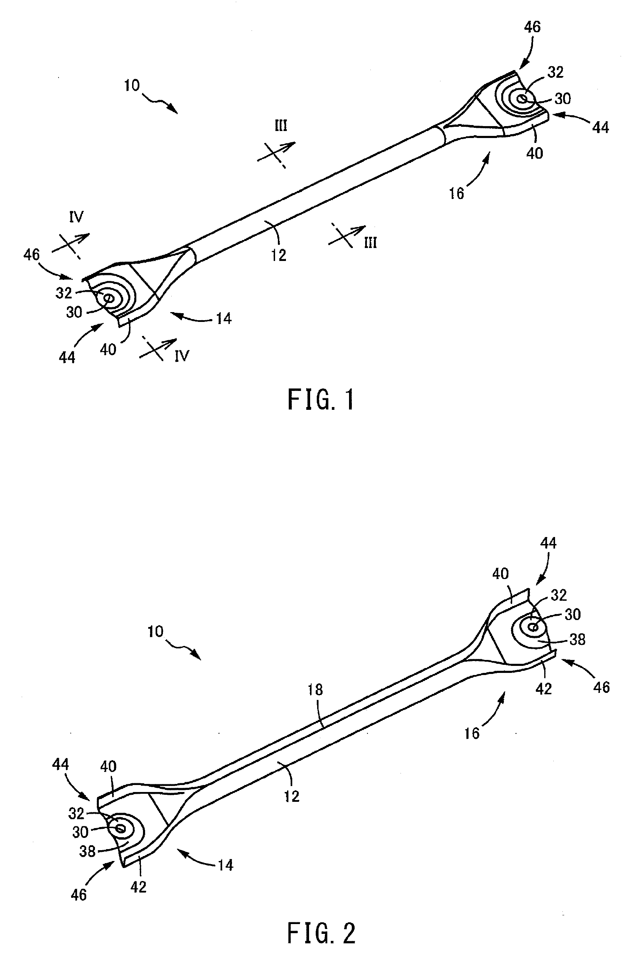

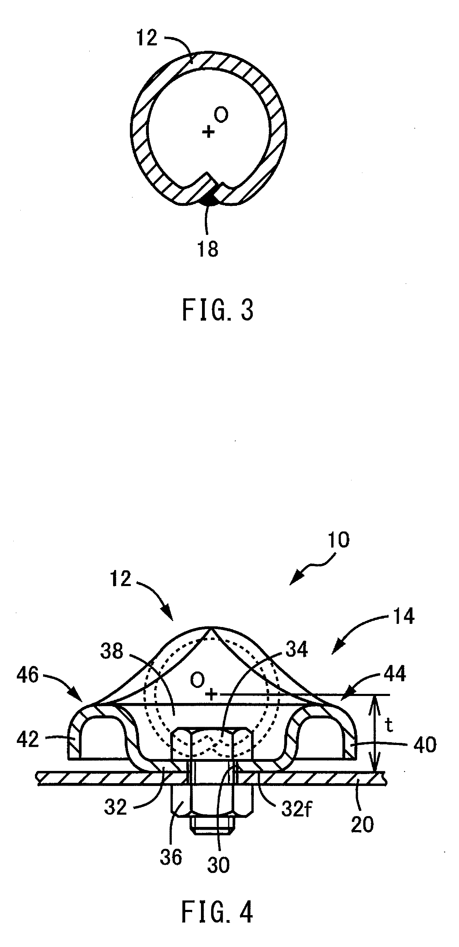

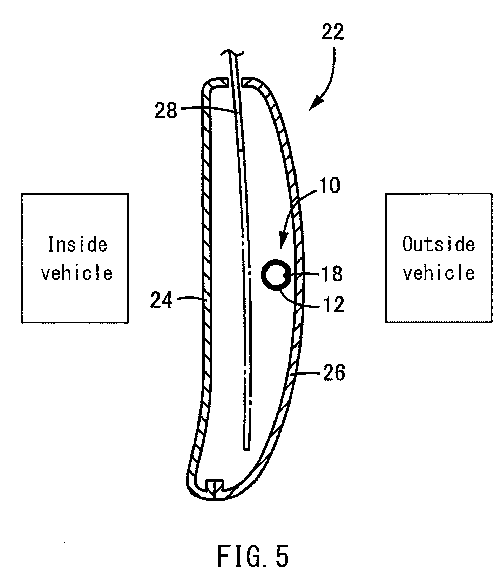

Embodiments of the present invention will be described in detail below with reference to the accompanying drawings. FIG. 1 is a perspective view of an impact beam 10 for vehicles which employs the present invention. FIG. 2 is a perspective view of the impact beam 10 as viewed from the back side, i.e. from the side having the joint 18. FIG. 3 is an enlarged sectional view of a tubular portion 12, viewed in the direction of arrows III in FIG. 1. FIG. 4 is an enlarged sectional view of an attachment portion 14 secured to a mounting location 20 in a vehicle, viewed in the direction of arrows IV in FIG. 1. The impact beam 10, which is a tubular reinforcement, is disposed in a vehicle side door 22 as shown in FIG. 5 for reducing the deformation of the side door 22 into the vehicle interior by an impact load from the outside of the vehicle, for example, in the event of a side collision. The vehicle side door 22 may include an inner panel 24 and an outer panel 26. The impact beam 10 is disposed closer to the outer panel 26 and extending parallel to the longitudinal axis of the vehicle (perpendicular to the plane of paper in FIG. 5) so that the impact beam 10 does not interfere with a lowered window pane 28 as shown in a dot-dash line. The mounting location 20 as shown in FIG. 4 is, for example, in the outer panel 26 to be reinforced, in the door frame where the outer panel 26 is attached, or in any other structure.

The impact beam 10 may be formed as a unitary piece from a single sheet of metal through press working processes such as bending and drawing. The impact beam 10 generally includes a cylindrical tubular portion 12 comprising the sheet metal rolled to have closed edges. The closed edges of the tubular portion 12 comprise the opposite edges of the sheet metal bent inward to abut on each other as shown in FIG. 3. The closed edges are welded together by arc welding continuously or at intervals along the length of the tubular portion 12 to form the joint 18. The impact beam 10 is disposed in the vehicle side door 22 of FIG. 5 in such an attitude that the joint 18 or closed edges of the tubular portion 12 faces toward the outside of the vehicle.

Attachment portions 14, 16 formed integrally with the tubular portion 12 longitudinally extend from the opposite ends of the length of the tubular portion 12. These attachment portions 14, 16 may be arranged symmetrical with respect to the tubular portion 12. Each of the attachment portions 14, 16 has a planar, flat circular attachment base 32 and having a fastening hole 30 in its center. The attachment base 32 is oriented to extend parallel to the centerline O of the tubular portion 12 and substantially perpendicular to the plane passing through the centerline O and the line of the joint 18, i.e. oriented to extend substantially to the left and right sides in FIG. 4. That surface of the attachment base 32 which is in the same side as the joint 18, namely the lower surface of the attachment base 32 in FIG. 4, serves as a contact surface 32f. Accordingly, with the contact surface 32f being in close surface contact with the mounting location 20, a threaded fastener 34 is screwed through the fastening hole 30 into a nut 36 provided on the mounting location 20. The impact beam 10 is thus securely and integrally attached to the mounting location 20.

The attachment base 32 is raised from its peripheral region, inclusive of the portions that continue to the tubular portion 12, to bring forward the contact surface 32f, into the same side as the joint 18, forming a partially cylindrical peripheral wall 38 comprising at least half circumference, so that the impact beam 10 can be attached to the mounting location 20 while the tubular portion 12 does not interfere with the mounting location 20. The peripheral wall 38 may be substantially semi-cylindrical and formed by press working processes such as drawing. The peripheral wall 38 may have a constant diameter, or may be truncated conical whose diameter decreases as it goes closer to the end, i.e. to the attachment base 32. The distance *t* from the centerline O of the tubular portion 12 to the contact surface 32f may be larger than the distance from the centerline O to the outer peripheral surface of the tubular portion 12, namely the radius of the tubular portion 12, so that the contact surface 32f is raised outward beyond the outer peripheral surface of the tubular portion 12. In the shown embodiment, the contact surface 32f is raised outward beyond the joint 18.

The lateral edges of each attachment portions 14, 16 comprise a pair of lateral flanges 40, 42 on the opposite sides of the peripheral wall 38 so that the lateral flanges 40, 42 extend along with the peripheral wall 38 toward the plane of the contact surface 32f. These lateral flanges 40, 42 are each bent substantially at a right angle toward the plane of the contact surface 32f, or downward as in FIG. 4, and the length of the projecting lateral flanges 40, 42 is smaller than the length by which the peripheral wall 38 is raised to the contact surface 32f, so that there is clearance between the lateral flanges 40, 42 and the mounting location 20. The lateral flanges 40, 42 run linearly and substantially parallel to the centerline O of the tubular portion 12 in the opposite sides of the peripheral wall 38, but are gradually curled near the tubular portion 12 and smoothly transition to the tubular portion 12. The lateral flanges 40, 42 on the either sides of the peripheral wall 38, together with the peripheral wall 38, form turnback portions 44, 46 on the opposite sides of the attachment base 32, each turnback portions defining a concavity recessed from the contact surface 32f, and having a U-shaped section perpendicular to the centerline O of the tubular portion 12 in FIG. 4.

In the impact beam 10 in the embodiments described above, the attachment base 32 is raised to bring forward the contact surface 32f, forming the peripheral wall 38. This allows the impact beam 10 to be disposed in the vehicle so that the contact surface 32f closely contacts the mounting location 20 for the secure fastening of the impact beam 10 to the mounting location 20. The lateral edges of the attachment portion comprises the lateral flanges 40, 42 on the opposite sides of the peripheral wall 38, and the peripheral wall 38 and the lateral flanges 40, 42 together form the turnback portions 44, 46 on opposite sides of the attachment base 32, each turnback portions defining a concavity recessed from the contact surface 32f, and having a U-shaped section perpendicular to the centerline O of the tubular portion 12. This configuration provides an increased rigidity against external forces that have a component parallel to the length of the tubular portion 12 and reduce the buckling of the attachment portions 14, 16, thereby stably providing the desired reinforcing ability of the tubular portion 12.

The attachment base 32 is oriented to extend parallel to the centerline O of the tubular portion 12 and substantially perpendicular to the plane passing through the centerline O and the joint 18, and the impact beam 10 is disposed in the side door 22 or other structure of a vehicle in such an attitude that the joint 18 of the tubular portion 12 faces toward the outside of the vehicle. This configuration assuredly provides the desired reinforcing ability of the tubular portion 12 against an impact load from the outside of the vehicle.

The attachment base 32 is flat circular, and the peripheral wall 38 is partially cylindrical comprising at least half circumference. This structure, combined with the lateral flanges 40, 42 on opposite sides of the peripheral wall 38, assuredly provides an increased rigidity of the attachment portions 14, 16.

While embodiments of the present invention have been described above in detail with reference to the drawings, the embodiments are only exemplary, and thus the present invention can be embodied in various modified or improved forms within the knowledge of those skilled in the art.

### Description of the Reference Numerals

10: Impact beam (tubular reinforcement)
12: Tubular portion
14, 16: Attachment portion
18: Joint (closed edges)
20: Mounting location for the impact beam
30: Fastening hole
32: Attachment base
32f: Contact surface
34: Threaded fastener
38: Peripheral wall
40, 42: Lateral flange
44, 46: Turnback portion
O: Centerline

## Claims

1. A tubular reinforcement for a vehicle, comprising:
a tubular portion comprising a sheet metal rolled to have closed edges, and
an integral attachment portion formed from the same sheet metal, the attachment portion extending longitudinally from an end of the tubular portion, the attachment portion having a planar attachment base, wherein the tubular reinforcement is disposed in the vehicle so that a contact surface of the attachment base closely contacts a mounting location in the vehicle, **characterized in that**
the attachment base is raised to bring forward the contact surface, forming a peripheral wall,
the lateral edges of the attachment portion comprise lateral flanges on the opposite sides of the peripheral wall, the lateral flanges extending along with the peripheral wall toward the plane of the contact surface, and
the peripheral wall and the lateral flanges together form turnback portions on both sides of the attachment base, each turnback portions defining a concavity recessed from the contact surface and having a U- or J-shaped section perpendicular to a centerline of the tubular portion.

2. The tubular reinforcement for a vehicle of claim 1, **characterized in that**
the attachment base is oriented to extend parallel to the centerline of the tubular portion and perpendicular to a plane passing through the centerline and the line of the closed edges of the tubular portion, and
the tubular reinforcement is disposed in the vehicle in such an attitude about the centerline that the closed edges of the tubular portion faces toward outside of the vehicle.

3. The tubular reinforcement for a vehicle of claim 1 or 2, **characterized in that**
the attachment base has a fastening hole for passing a threaded fastener therethrough, and the attachment base is flat circular including the fastening hole, and
the peripheral wall is partially cylindrical comprising at least half circumference including portions that continue from the tubular portion.
